Europäisches Patentamt

European Patent Office

Office européen des brevets

(11) Numéro de publication : **0 088 665 B1**

(12) **FASCICULE DE BREVET EUROPÉEN**

(45) Date de publication du fascicule du brevet :
**28.05.86**

(21) Numéro de dépôt : **83400365.9**

(22) Date de dépôt : **22.02.83**

(51) Int. Cl.⁴ : **G 03 B 27/46**

(54) **Caméra modulaire multi-partitions pour l'obtention de microfiches.**

(30) Priorité : **04.03.82 FR 8203570**

(43) Date de publication de la demande :
**14.09.83 Bulletin 83/37**

(45) Mention de la délivrance du brevet :
**28.05.86 Bulletin 86/22**

(84) Etats contractants désignés :
**DE GB**

(56) Documents cités :
**FR-A- 1 597 612**
**FR-A- 2 430 033**
**US-A- 2 763 182**
**US-A- 3 261 259**
**US-A- 3 850 522**
**US-A- 4 176 948**

(73) Titulaire : **CENTRE NATIONAL DE LA RECHERCHE SCIENTIFIQUE (CNRS)**
**15, Quai Anatole France**
**F-75700 Paris (FR)**

(72) Inventeur : **Goulard, Claude**
**3, rue Robert Lanen**
**F-92190 Meudon (FR)**
Inventeur : **Accettella, Serge**
**3, square J.P. Brissot**
**F-92340 Bourg La Reine (FR)**
Inventeur : **Cathaly-Pretou, Gérard**
**15, rue Gaston Charles**
**F-94120 Fontenay Sous Bois (FR)**
Inventeur : **Fages, Bernard**
**135 rue de Belleville**
**F-75019 Paris (FR)**
Inventeur : **Jeannin, Daniel**
**85, rue de Clignancourt**
**F-75018 Paris (FR)**
Inventeur : **Laloux, Philippe**
**11, allée d'Anjou**
**F-93330 Neuilly sur Marne (FR)**
Inventeur : **Lefur, Jean**
**182, avenue Jean Lolive**
**F-93500 Pantin (FR)**

(74) Mandataire : **Schrimpf, Robert et al**
**Cabinet Regimbeau 26, Avenue Kléber**
**F-75116 Paris (FR)**

Jouve, 18, rue St-Denis, 75001 Paris, France

## Description

L'invention concerne un dispositif de prise de vues, ou caméra, pour la réalisation de microfiches.

Devenue un support documentaire essentiel, une microfiche est un film photographique en feuille rectangulaire comportant une ou plusieurs micro-images (qui nécessitent un grandissement pour l'observation) et une zone d'en-tête ou titre destinée à recevoir des informations d'identification et de repérage lisibles à l'œil nu. On appelle « partition » la disposition des micro-images en lignes et colonnes sur la microfiche.

La présente invention concerne plus précisément un dispositif de prise de vues pour l'obtention de microfiches, du type connu en lui-même comprenant un bâti muni d'une platine recouverte par un capot étanche à la lumière, des moyens de déplacement disposés sous le capot pour déplacer de façon contrôlée un bloc porte-film parallèlement à la platine selon deux directions orthogonales dites X-Y en vis-à-vis d'un poste de prise de vues ménagé dans la platine, afin de permettre l'impression sur le film d'une succession d'images élémentaires rangées selon une partition choisie parmi différentes partitions d'images élémentaires admissibles sur les microfiches, les moyens de déplacement du bloc porte-film comprenant un guide longitudinal solidaire de la platine, supportant un chariot, un entraînement en X de ce chariot dans le sens du guide longitudinal, par un premier ensemble moteur pas à pas et vis sans fin venant en prise sur un premier curseur solidaire du chariot, tandis que le chariot porte à son tour un entraînement Y dans le sens transversal au guide longitudinal par un second ensemble moteur pas à pas et vis sans fin venant en prise sur un second curseur lequel est ainsi mobile pas à pas en X et en Y de façon commandée.

Un dispositif de prise de vues pour l'obtention de microfiches, du type précité, est décrit par exemple dans le document US-A- 3 850 522.

Plus précisément, selon ce document, la platine s'étend verticalement et le bloc porte-film est solidaire du second curseur pour être déplacé dans un plan vertical, parallèlement à la platine, selon deux directions orthogonales.

Le document US-A-4 176 948 décrit également un dispositif de prise de vues pour l'obtention de microfiches, du type précité.

Selon le document US-A-4 176 948, la platine est horizontale, et le bloc porte-film formé d'une plaque à dépression, est solidaire d'un curseur entraîné en déplacement dans un plan horizontal selon deux directions orthogonales.

Une autre caméra microfiches est décrite par exemple dans le brevet français FR-A- 1 597 612.

Les caméras connues jusqu'à maintenant pour l'usage professionnel (haute qualité de reproduction) sont spécialisées, c'est-à-dire qu'elles sont incapables, sans modifications profondes, de s'adapter à tout travail particulier de prises de vue. Cette adaptation nécessite en particulier :

le changement facile de partitions, parmi les différentes partitions normalisées, uniformes, variables ou type COM (édité sur imprimantes d'ordinateur) à partir de documents papier,

la reproduction de microfiches préexistantes ou « transposition de films »,

la possibilité de passer du format simple au double format de micro-images lors de l'élaboration d'une même microfiche,

l'aptitude à traiter aussi bien du film en rouleau que du film prédécoupé au format des microfiches.

La présente invention vise essentiellement à fournir une caméra modulaire améliorée qui satisfasse au mieux ces différents besoins, et ce, à l'aide de moyens aussi simples et sûrs que possible, en même temps qu'économiques sur le plan de la fabrication.

Un autre but important de la présente invention est de fournir un guidage précis et exempt de vibrations du bloc porte-film.

Ces différents buts sont atteints, selon l'invention, par un dispositif de prise de vues pour l'obtention de microfiches du type précédemment défini, caractérisé par le fait que :

la platine possède une surface supérieure plane horizontale,

le bloc porte-film est muni de patins-supports aptes à glisser à frottement sec sur la face supérieure de la platine, et

que le bloc porte-film est monté solidaire du second curseur horizontalement en X et en Y et libre verticalement par rapport à celui-ci pour reposer constamment contre la face supérieure plane de la platine.

De préférence, selon l'invention, le guide longitudinal supporte une extrémité du chariot tandis qu'une autre extrémité de ce chariot repose sur la platine.

Selon une autre caractéristique avantageuse de l'invention, le bloc porte-film est apte à recevoir deux magasins dérouleur et enrouleur de film rouleaux, tandis que sont également prévus dans la platine deux passages aptes à être équipés en partie inférieure de deux magasins de microfiches prédécoupées.

Selon une autre caractéristique également importante de l'invention, la platine définit au niveau du poste de prise de vues, sous sa face supérieure plane horizontale, un couloir où coulisse de façon commandée, et parallèlement à la face supérieure plane de la platine, un chariot porte-fenêtres, ce chariot comportant des alvéoles en dent de scie tournés vers le haut, définissant deux emplacements de cadre porte-fenêtres, les cadres porte-fenêtres supportant respectivement deux fenêtres différentes correspondant à des formats différents d'image sur une microfiche, tandis que les cadres porte-fenêtres sont munis chacun de quatre tétons horizontaux latéraux, par l'intermédiaire desquels les cadres porte-fenêtres reposent dans les alvéoles, deux de ces tétons horizontaux étant plus longs que les autres, quatre tétons verticaux fixes étant prévus solidaires de la platine, disposés par paire dans le couloir en regard des tétons horizontaux les plus longs, de telle sorte que l'appui des deux tétons horizontaux les plus longs d'un cadre porte-fenêtres sur deux des tétons verticaux fixes, appui qui intervient lors du déplacement du chariot dans le couloir, fasse monter l'un des cadres porte-fenêtres sur une paroi en dent de scie des alvéoles du chariot pour l'amener en position de prise de vues.

D'autres caractéristiques et avantages de l'invention apparaîtront dans la description détaillée qui va suivre, ainsi que sur les dessins annexés, sur lesquels :

la figure 1 illustre schématiquement l'architecture générale de la caméra selon la présente invention ;

la figure 2 illustre schématiquement un exemple de constitution d'une microfiche ;

la figure 3 est une vue en perspective illustrant le mécanisme d'entraînement du bloc porte-film ;

la figure 4A à 4C sont trois vues correspondantes montrant de manière détaillée la réalisation du chariot porte-fenêtres ;

les figures 5A et 5B montrent les systèmes optiques placés sous la platine supérieure de la caméra ;

la figure 6 est le schéma de principe des circuits électroniques associés à la caméra de l'invention ;

la figure 7 est un schéma électronique plus détaillé montrant la commande de déplacement en X et en Y du bloc porte-film ; et

la figure 8 est un organigramme montrant comment s'effectue la suite de prise de vues relative à une microfiche donnée.

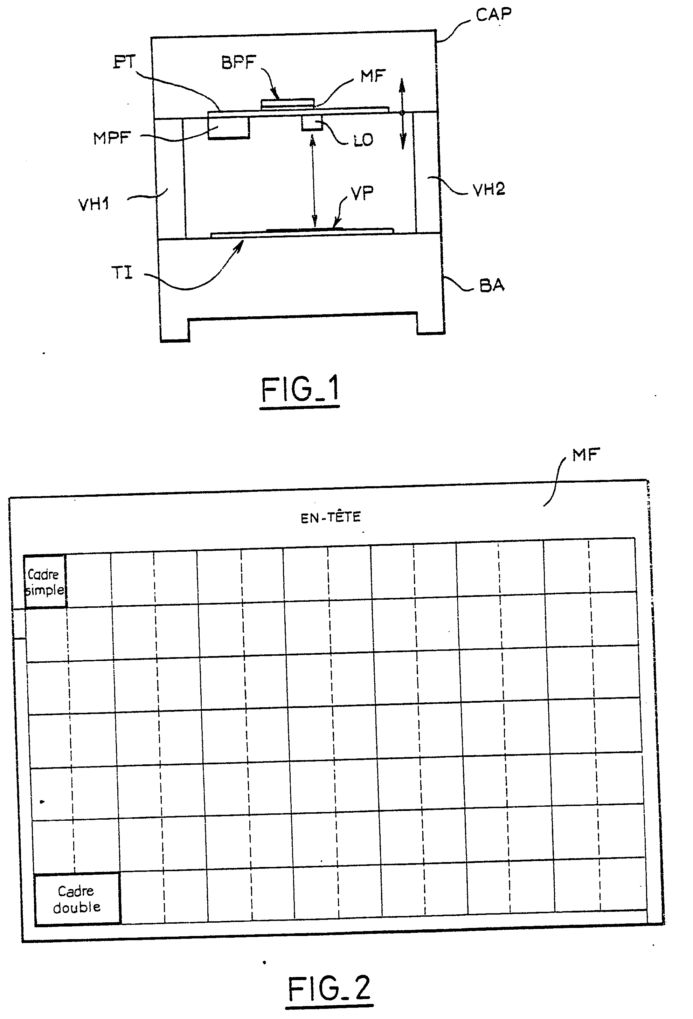

Sur la figure 1, on voit le bâti BA de la caméra. En partie supérieure, ce bâti est muni d'une platine PT horizontale, possédant une face supérieure plane recouverte par un capot étanche à la lumière noté CAP. A l'intérieur du capot sont prévus des moyens de déplacement X-Y (non représentés sur la figure 1) d'un bloc porte-film BPF. Le bloc porte-film est apte à maintenir par aspiration un film photosensible MF au voisinage de la face supérieure de la platine, parallèlement à celle-ci. De surcroît, le bloc porte-film BPF est mobile de façon indexée pour déplacer le film au-dessus d'un poste de prise de vues ménagé dans la platine, au-dessus d'une lentille objectif principale notée LO, qui sert à la prise de vues pour les micro-images élémentaires de la microfiche. On comprend immédiatement que le déplacement indexé du bloc porte-film va permettre l'impression sur le film d'une succession d'images élémentaires rangées selon une partition. Cette partition devra pouvoir être choisie parmi différentes partitions d'images élémentaires admissibles sur la microfiche.

En bas, est prévue une table inférieure TI, susceptible de recevoir un document à reproduire noté VP, en position convenable par rapport à la lentille objectif LO. Le bâti supérieur est mobile verticalement sous l'effet d'un dispositif de guidage et d'entraînement, constitué par exemple de vérins VH1 et VH2. La réalisation du mouvement du bâti supérieur à l'aide de ces vérins est considérée comme connue de l'homme de l'art.

On voit encore sur la figure 1 un magasin MPF, qui peut servir à stocker du film photographique prédécoupé au format des microfiches. Derrière ce magasin en est situé un autre, qui recevra les microfiches après l'impression des micro-images et du titre.

La figure 2 illustre schématiquement une microfiche MF, qui comporte une partie d'en-tête, ainsi qu'une partie de micro-images. On voit immédiatement que ces micro-images pourront être reproduites soit avec un cadre simple, soit avec un cadre double.

Les microfiches sont normalisées au format A6, mesure 148 mm × 105 mm. Sur la base de ce format, on utilise des partitions uniformes de 98 vues simples ou 49 vues doubles, ou encore de 60 vues simples ou 30 vues doubles. On utilise également des partitions variables de 32 vues simples ou 16 vues doubles. Enfin, dans le cas de documents directement édités sur imprimantes d'ordinateur, on utilise aussi des partitions à 420 vues ou 270 vues simples (partition type COM).

La figure 2 illustre à titre d'exemple le cas d'une partition à 98 vues simples ou 49 vues doubles. On se rappellera aussi qu'il est souhaitable de pouvoir passer à l'intérieur d'une même microfiche du cadre simple au cadre double.

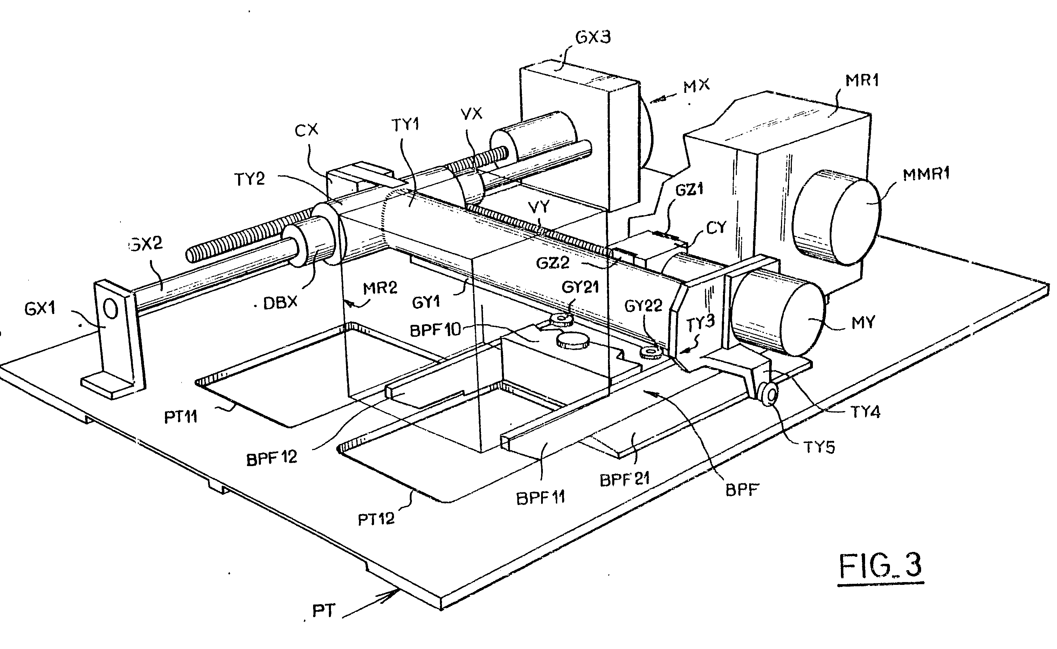

La figure 3 illustre le dispositif d'entraînement du bloc porte-film BPF, sur la platine PT, le capot étant enlevé.

Sur la platine PT est monté un guidage longitudinal ou guidage en X, constitué à une extrémité d'une équerre GXI fixée sur la platine, et à l'autre extrémité d'un bloc vertical GX3. Entre ces deux parties est montée une tige de guidage GX2, sur laquelle coulisse par l'intermédiaire de deux douilles à bille DBX un chariot, en forme générale de T, et constitué d'une partie longitudinale TY2 courte, solidaire d'une partie transversale longue TY1. A l'opposé de cette partie TY1, se trouve monté solidairement de la pièce TY2 un écrou curseur CX, qui vient en prise sur une vis sans fin VX, actionné par un moteur pas à pas MX solidaire du bloc GX3. On voit immédiatement que le moteur MX va pouvoir commander un mouvement pas à pas du chariot TY1, TY2 dans la direction X.

A l'autre extrémité de la pièce transversale longue TY1 est monté un flasque TY3, qui supporte un second moteur pas à pas noté MY, et qui est muni en partie inférieure d'une équerre TY4 se terminant par une roulette TY5 apte à venir reposer et rouler sur la face supérieure de la platine PT. Le moteur pas à pas MY entraîne une vis sans fin VY, parallèle à la pièce TY1 du chariot, et sur cette vis sans fin VY coulisse un écrou curseur CY, muni latéralement de deux glissières GZ1 et GZ2 dans lesquelles se déplacent à translation verticale deux coulissots solidaires du bloc porte-film BPF. Enfin, en partie inférieure de la pièce TY1 est prévu un rail de section rectangulaire allongé verticalement, noté GY1, et sur lequel viennent en prise de part et d'autre des galets tels que GY21 et GY22 montés sur le bloc porte-film BPF.

Il apparaît donc que le bloc porte-film BPF est monté solidaire du second curseur CY horizontalement en X et en Y, mais qu'il est libre verticalement par rapport à celui-ci.

D'une manière générale, le bloc porte-film est constitué d'un bâti BPF10, solidaire de deux longerons BPF11 et BPF12 parallèles à la direction X, et sous lesquels sont montés deux patinssupport, dont un seul, BPF21, est visible sur la figure 3. Ces patins-supports viennent en appui à frottement sec sur la face supérieure de la platine PT. Entre les deux patins est montée une plaque perforée permettant le maintien par aspiration du film photosensible, de manière connue en soi.

Dans un mode de réalisation particulier, la platine PT est réalisée en alliage léger, de densité 2,8, et non corrodable, tel que celui fourni sous la dénomination « ALUMAX ». Après découpage des orifices convenables, et usinage blanc de la face supérieure de la platine, celle-ci fait l'objet d'un traitement thermique spécial comportant addition superficielle d'un lubrifiant sec à base de molybdène. De leur côté, les patins tels que BPF21 sont réalisés en acier dur allié. Il est considéré actuellement que le coefficient de frottement statique aussi bien que dynamique entre les patins et la face supérieure de la platine doit être inférieur à 0,30.

D'autres alliages légers, ainsi que d'autres revêtements de frottement sec peuvent être envisagés, notamment des revêtements à base de sulfure de titane, pourvu que l'on conserve un coefficient de frottement suffisamment faible.

Dans ces conditions, et de façon a priori étonnante, il a été observé que l'on peut réaliser un excellent positionnement du bloc porte-film, ainsi que du film par rapport à la face supérieure de la platine, bien que le mécanisme d'entraînement en X et en Y ne soit pas directement solidaire de ce bloc porte-film. Il est indiqué à cet égard que pour la bonne constance de lisibilité des images, le positionnement vertical doit être effectué avec une précision d'environ 2/100 de mm.

Dans une variante de constitution de la platine, on pourra réaliser celle-ci en d'autres matières légères, notamment des matières synthétiques, convenablement revêtues pour respecter la condition de faible frottement ainsi que de longévité pour le déplacement à frottement sec du bloc porte-film BPF sur la face supérieure de la platine.

Enfin, la figure 3 fait également apparaître deux orifices PT11 et PT12, qui servent au passage de films prédécoupés au format des microfiches, à partir d'un magasin débiteur et d'un magasin récepteur fixés sous la platine, et non représentés ici (l'un des magasins est vu sur la figure 1).

L'autre mode d'alimentation en film, à partir d'un rouleau de film, est également représenté sur la figure 3, puisque l'on voit sur les longerons BPF11 et BPF12 du bloc porte-film deux magasins MR1 et MR2, l'un débiteur, et l'autre récepteur. Il est prévu sur l'un des magasins un dispositif de retenue du film, et sur l'autre un moteur d'entraînement, noté MMR1 sur la figure 3.

Des liaisons électriques non représentées relient les différents moteurs à la partie fixe de la platine. De même, une liaison pneumatique relie le plateau d'aspiration du bloc porte-film à la partie fixe de la platine.

Enfin, on prévoit des dispositifs électriques de butée précise sur des dispositifs de guidage en X et en Y, de façon à obtenir des références de position pour le travail des moteurs pas à pas. Ces dispositifs sont par exemple des détecteurs opto-électroniques précis, associés en bout de course à des détecteurs électromécaniques stoppant par sécurité le fonctionnement des moteurs pas à pas.

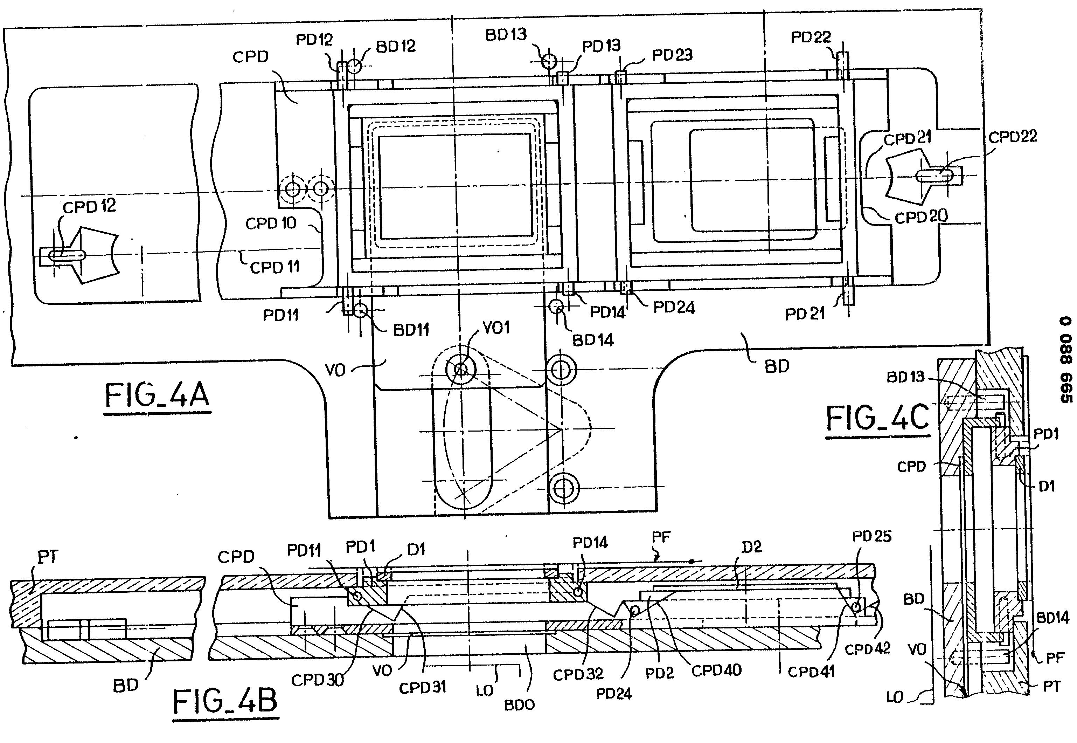

On se référera maintenant aux figures 4A à 4C, qui font apparaître le mécanisme de fenêtres, situé sous la platine PT, au droit de l'emplacement de prise de vues principale pour la réalisation des micro-images.

Sur les figures 4B et 4C, on distingue en LO la face arrière de l'objectif de prise de vues. Autour de cet endroit, la face inférieure de la platine PT est échancrée pour définir un couloir longitudinal, fermé en partie inférieure par une embase BD. La figure 4A montre seulement, en vue de dessus, l'embase BD avec les éléments définissant la fenêtre, la platine PT étant enlevée.

Dans le couloir ainsi défini par la platine PT et l'embase BD coulisse un chariot porte-fenêtres noté généralement CPD. Ce chariot se présente sous la forme d'un cadre allongé, dont les grands côtés sont munis d'alvéoles orientées vers le haut, en forme de dent de scie. On distingue sur la figure 4B un alvéole défini par la rampe CPD30, et par la rampe plus accentuée CPD31. Un autre alvéole est défini par la rampe CPD32, parallèle à la rampe CPD30, et suivie d'une autre rampe plus accentuée en sens inverse. Immédiatement après, on trouve encore un autre alvéole défini par une rampe accentuée suivie d'une rampe CPD40 symétrique des rampes CPD30 et CPD32. Enfin, dans la partie droite de la figure 4B, un dernier alvéole est défini par la rampe accentuée CPD41, suivie de la rampe CPD42 parallèle à la rampe CPD40. L'autre grand côté du chariot porte-fenêtres CPD est équipé de la même manière.

Les alvéoles associés à CPD30 et CPD32, et les alvéoles identiques situés de l'autre côté du chariot définissent un emplacement de cadre porte-fenêtres, ce cadre porte-fenêtres étant noté PD1. Le cadre PD1 supporte à son tour une fenêtre D1, correspondant par exemple au format d'image simple de la microfiche. Le cadre PD1 comporte latéralement des tétons allongés PD11 et PD12, et des tétons plus courts PD13 et PD14, qui en l'absence de toute autre sollicitation viennent se placer au fond des alvéoles CPD30 et CPD32. De la même manière, un autre cadre porte-fenêtres PD2 repose par ses tétons PD21 à PD24 au fond des alvéoles définis par les rampes CPD40 et CPD41. Cet autre cadre PD2 supporte une autre fenêtre D2, qui correspond par exemple au double format de la partition de la microfiche.

On notera enfin que sont prévus, d'une manière symétrique par rapport au poste de prise de vues, quatre tétons verticaux notés BD11 à BD14, et illustrés en particulier sur la figure 4A. Ces tétons sont solidaires de l'embase BD. Ils vont permettre la mise en place de l'une ou l'autre des fenêtres en position de travail.

A cet effet, l'ensemble du chariot CPD est mobile sous l'effet d'un dispositif de traction comprenant une crémaillère et un pignon accouplés à un moto-réducteur (non représentés). Des dispositifs opto-électroniques CPD12 et CPD22 sont également prévus pour arrêter le monoréducteur en fins de course du chariot.

Dans la position illustrée sur les figures 4A et 4B, c'est le porte-fenêtres D1 (de gauche) qui est en position de travail. On notera que ces tétons PD11 et PD12 sont venus en butée sur les tétons verticaux BD11 et BD12, moyennant quoi le cadre porte-fenêtres PD11 est monté sur les rampes CPD30 et CPD32, pour venir en butée sur l'usinage inférieur de la platine PT, et amener ainsi la fenêtre en affleurement sur la face supérieure de la platine, juste au-dessous du plan de film noté PF.

Pour changer de fenêtre (et donc de partition), la manœuvre est très simple, il suffit d'actionner le déplacement du chariot vers la gauche, moyennant quoi le cadre porte-fenêtres PD1 redescend dans ses alvéoles, ce qui lui permet de passer à nouveau dans le couloir ménagé entre l'embase BD et la platine PT. Dès que l'autre cadre porte-fenêtres PD2 a suffisamment avancé vers la gauche, ses tétons allongés horizontalement PD21 et PD22 viennent en butée sur les tétons verticaux BD13 et BD14, ce qui là encore va solliciter le cadre porte-fenêtres PD2 à monter sur les rampes CPD40 et CPD42, par ses tétons tels que PD24 et PD25, après quoi il va à son tour venir en butée sous la platine au niveau du poste de prise de vues, et amener ainsi l'autre fenêtre D2 en position de travail.

On obtient ainsi d'une manière simple un positionnement très précis de deux fenêtres de taille différente au niveau de poste de prise de vues des micro-images.

Sur la figure 4A, on voit également un volet obturateur VO, qui est mobile dans un plan horizontal, sous l'effet d'une came VO1 actionnée par des moyens non représentés, pour permettre l'exposition.

Ce dispositif obturateur étant situé à l'intérieur même de la platine, il apparaît immédiatement que la partie située au-dessous de la platine peut rester exposée suffisamment à la lumière pour le travail de l'opérateur.

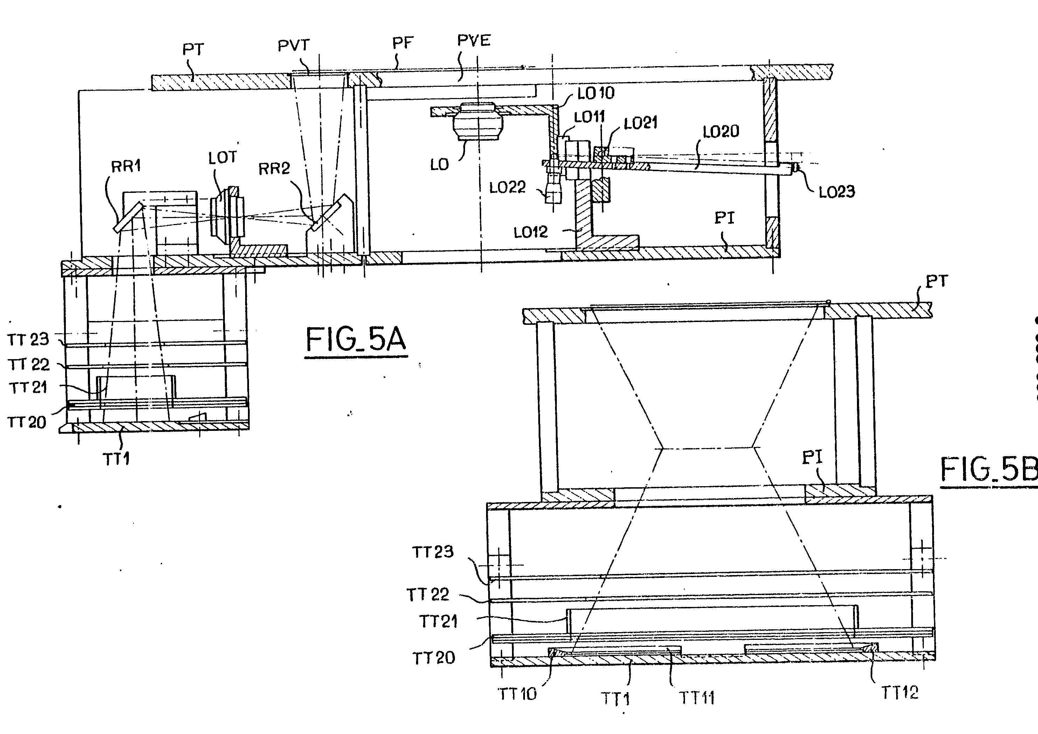

En référence aux figures 5A et 5B, on décrira maintenant brièvement les dispositifs placés sous la platine PT. Au niveau du poste de prise de vues principal PVE est placée la lentille objectif LO déjà citée, qui est montée sur une équerre LO10, mobile à coulissement vertical par un coulissot LO11 sur une autre équerre LO12 solidaire de la plaque intermédiaire PI parallèle à la platine. Egalement sur cette équerre LO12 est monté un pivot LO21 qui supporte un bras LO20 dont une extrémité vient actionner par une butée micrométrique LO22 un déplacement vertical de la lentille objectif, tandis que son autre extrémité est munie d'un galet LO23, actionné par une came de mise au point elle-même manœuvrée par un fil dont une extrémité est reliée à la partie fixe du bâti. Ce qui permet d'ajuster la position de la lentille LO en fonction de la position du bâti supérieur de la figure 1. De manière très simple, on réalise par là une mise au point automatique.

La figure 5A fait également apparaître un poste de prise de vues auxiliaire, noté PVT, qui sert à la prise de vues pour le titrage. Une table spéciale notée TT1 reçoit les informations qui doivent constituer l'en-tête ou titre de la microfiche. Cette table TT1 est surmontée d'un dispositif d'éclairage et de canalisation de faisceau convenable, constitué par les pièces TT20 à TT23. Un réflecteur allongé transversalement à la figure 5A, noté RR1, renvoie l'image de la bande d'en-tête vers la lentille d'en-tête LOT, qui est suivie à nouveau d'un miroir de renvoi RR2, lequel dirige l'image vers le poste de prise de vues PVT.

La figure 5B est une coupe de la figure 5A suivant l'axe optique du système optique de titrage. Elle permet de mieux comprendre la géométrie des organes TT20 à TT23, ainsi que de voir le dispositif de positionnement précis des informations de titre, à l'aide d'un cadre rectangulaire défini par les pièces TT10, TT11 et TT12.

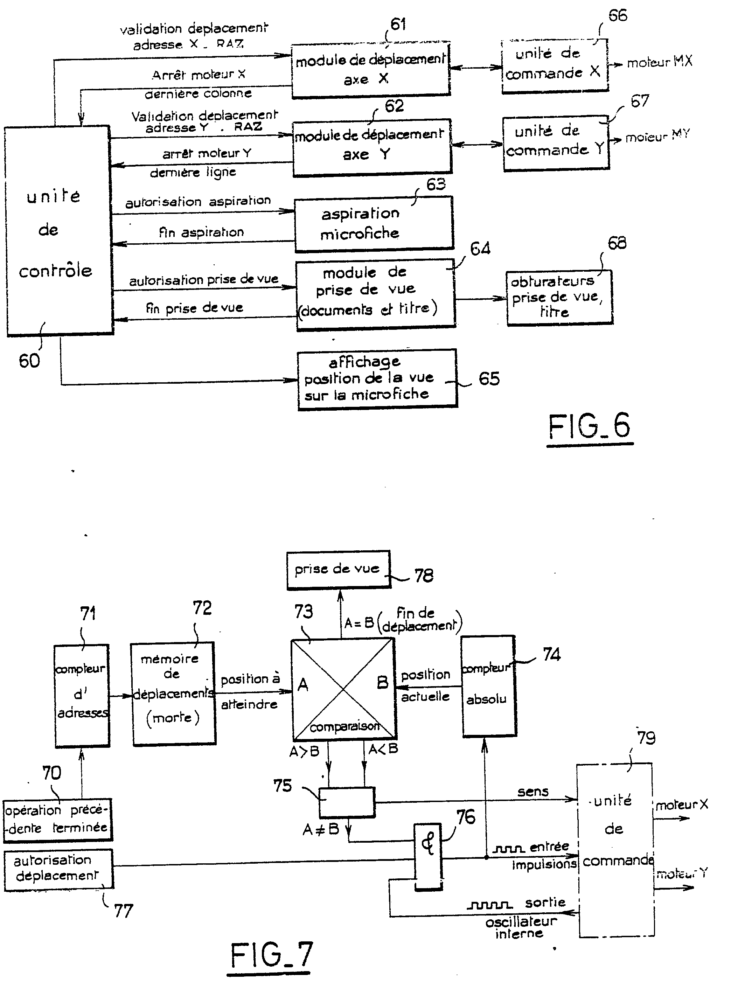

La figure 6 illustre maintenant le schéma de principe de l'électronique associé à la caméra selon l'invention.

Des blocs 66 et 67 servent respectivement d'unités de commande pour les moteurs pas à pas MX et MY.

A titre de réalisation détaillée, le moteur MX peut être le modèle 34 PMC 006 disponible en France auprès de la société SOCITEC. Le moteur MY, qui entraîne une charge moindre, peut être le modèle 23 PMCH 302 disponible auprès de la même société. Les unités de commande 66 et 67 peuvent alors être regroupées dans le dispositif dit « Translateur à régulation de courant 1055 » vendu par la même société. Ces moteurs travaillent à 200 pas par tour, et peuvent être commandés en demi-pas, et associés à une vis au pas de 5 mm, et de diamètre 12 mm. La fréquence des pas des moteurs s'établit alors au niveau maximal à 13 333 Hz.

Les unités 66 et 67 sont respectivement commandées par des modules de déplacement suivant l'axe X et suivant l'axe Y 61 et 62. Ceux-ci sont sous les ordres de l'unité de contrôle 60, qui leur envoie des ordres de validation de déplacement ainsi que d'adresse et de remise à zéro, en X pour le module 61 et en Y pour le module 62. Inversement, ces modules envoient des informations d'arrêt moteur X ou d'arrêt moteur Y, en dernière colonne ou en dernière ligne, en direction de l'unité de contrôle 60.

L'unité de contrôle 60 envoie également des ordres d'autorisation d'aspiration ou de fin d'aspiration à un dispositif 63 qui commande le mécanisme d'aspiration incorporé au bloc porte-film. L'unité de contrôle 60 agit encore sur le module de prise de vues 64 pour les documents et le titre, en délivrant à ce module une autorisation de prise de vues, et en recevant de celui-ci une information de fin de prise de vues. Le module 64 agit sur les obturateurs 68 pour la prise de vues, et à la fin de la microfiche pour le titre.

Enfin, l'unité de contrôle 60 pilote un organe 65 destiné à l'affichage de la position de la vue sur la microfiche.

On se référera maintenant à la figure 7, qui illustre schématiquement la construction de l'un des modules de déplacement 61 et 62.

Sur cette figure 7, un bloc 70 définit une information indiquant que l'opération précédente est terminée. L'excitation de ce bloc 70 fait avancer un compteur d'adresse 71, qui actionne une mémoire morte de déplacement 72. La mémoire morte de déplacement 72 dépend naturellement de la partition à exécuter dans les microfiches. On voit immédiatement qu'avec une pluralité de mémoires mortes, on peut satisfaire un grand nombre de partitions. Pour chaque adresse, qui correspond donc au centre de l'emplacement de micro-images suivantes, la mémoire de déplacement 72 va définir une position à atteindre que l'on a noté A sur la figure 7, et qui est appliquée à un comparateur 73.

En retour du bloc 79, réunissant les blocs 66 et 67 de la figure 6, il vient sur un compteur absolu 74 la position actuelle du bloc porte-film, position qui est notée B. Le comparateur 73 indique à une unité 75 si A est supérieure ou inférieure à B, le bloc 75 définissant alors un sens de déplacement pour l'unité de commande 79. Il définit également une information A différente de B, qui est appliquée à une porte ET 76 recevant par ailleurs d'un bloc 77 incorporé à l'unité de contrôle une autorisation de déplacement, ainsi que de l'unité de commande 79, la sortie d'un oscillateur destiné à définir la fréquence de commande des moteurs pas à pas. Si A est différente de B, si un déplacement est autorisé, on appliquera alors par la sortie de 76 des impulsions de commande à l'unité 79 qui actionne en conséquence le moteur X ou le moteur Y, dans le sens défini par le bloc 75.

De cette manière, on atteint rapidement dans le compteur absolu la valeur de B égale à A. A ce moment, le déplacement du moteur pas à pas intéressé cesse, et une information A égale B est délivrée par le comparateur 73 au dispositif de validation de prise de vues 78 incorporé à l'unité de contrôle 60.

Ce schéma de la figure 7 montre très clairement que, une fois résolus les problèmes mécaniques de positionnement précis du bloc porte-film au-dessus de la platine, une disposition à moteur pas à pas permet d'une manière très simple de s'adapter à tout type de partition sur la microfiche, par simple sélection de la mémoire morte 72.

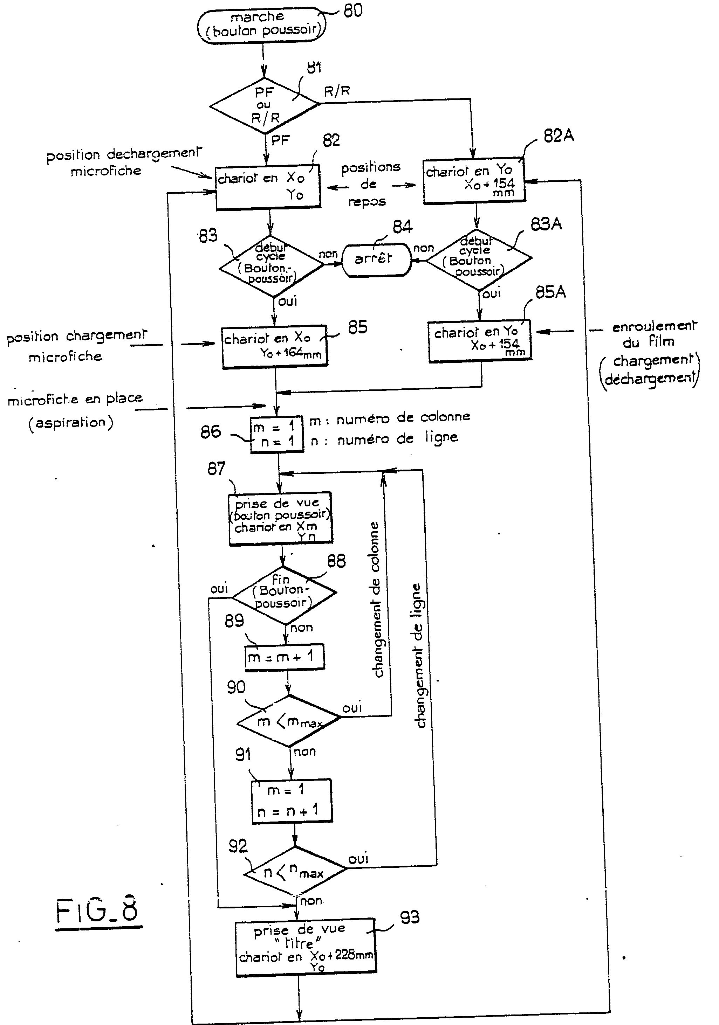

On va maintenant détailler en référence à l'organigramme de la figure 8 les opérations qui interviennent pour les prises de vues sur une microfiche.

L'opérateur actionne tout d'abord un bouton-poussoir de marche, qui est surveillé, et définit le premier pas 80 de l'organigramme de la figure 8.

Après cela, intervient un test 81 qui examine si le film photosensible est délivré en rouleau (R/R), ou bien par microfiche prédécoupée (PF). S'il s'agit de film prédécoupé, on va directement vers l'étape 82, qui amène le bloc porte-film en position de déchargement de la microfiche précédente sur le magasin récepteur de microfiche déjà exposé. Après cela, l'étape 83 attend que l'opérateur actionne le bouton-poussoir de début de cycle. Tant que celui-ci n'est pas actionné, on reste en arrêt. Dès que le bouton-poussoir est actionné, l'étape 85 amène le chariot dans la position de chargement d'une microfiche vierge, qui est notée XO et YO + 154 mm. Les grandeurs XO et YO définissent des références de position établies à l'intérieur de l'électronique, d'une manière connue en soi.

Après cela, la microfiche est maintenue en place par aspiration, et l'étape 86 définit un numéro de colonne m égal à 1, et un numéro de ligne n égal à 1 lui aussi.

L'étape 87 attend que l'opérateur actionne le bouton-poussoir de prise de vues, pour amener le chariot à la position X et Y correspondant aux indices m et n en cours, compte tenu de ce que définit la mémoire morte de déplacement 72 de la figure 7. Avant d'agir sur le bouton de prise de vues, l'opérateur a naturellement placé le document à reproduire sur l'emplacement VP de la table inférieure TI illustrée sur la figure 1, dans la position convenable par rapport à la lentille objectif LO.

Tant que l'opérateur n'appuie pas sur « fin », le test 88 va passer en 89, qui consiste à incrémenter d'une unité l'indice m. Le test 90 surveille si l'indice m est inférieur à la valeur maximum pour la partition retenue. Si cette condition est réalisée, on retourne à l'étape 87. Dans le cas contraire, l'étape 91 passe à la ligne suivante n = n + 1, en rétablissant le numéro de colonne à la valeur n = 1. Le test 92 examine alors si le nombre de lignes demeure inférieur à sa valeur maximum. Si cette condition est vérifiée, on retourne à l'étape 87. Si non, on passe à l'étape 93 qui consiste à la prise de vues pour le titrage, et amène le chariot dans la position spéciale correspondante, qui est définie ici par XO + 228 mm et YO. Les modalités de prise de vues « titre » s'effectuent également sur commande par bouton-poussoir de l'opérateur, après mise en place du titre convenable sur la table TT1 de la figure 5A.

On examinera maintenant la variante où le film est disponible en rouleau. Dans ce cas, la sortie du test 81 va vers l'étape 82 A, qui amène le chariot en YO et XO + 154 mm. Après cela, le test 83A attend l'indication de début de cycle par bouton-poussoir actionné par l'opérateur. Dès que cet actionnement est vérifié, l'étape 85A réitère le positionnement du chariot en YO et XO + 154 mm, après avoir effectué un enroulement du film propre à amener au droit de l'emplacement de prise de vues une quantité de film vierge correspondant au format d'une microfiche. Après cela, on retrouve les étapes 86 et suivantes précédemment décrites.

Lorsqu'il y a lieu de changer en cours de route entre le format simple et le format double de micro-images, l'unité de contrôle 60 effectue des opérations logiques simples permettant de déterminer s'il reste sur la ligne en cours pour la microvue un emplacement suffisant pour mettre une micro-image au double format. Si cela est possible, une telle image va pouvoir être prise, après que l'unité centrale ait commandé le déplacement convenable du chariot porte-fenêtres, de la manière décrite en référence aux figures 4A à 4C.

Par ailleurs, les manipulations d'adresse correspondant au passage du simple format au double format et inversement peuvent être résolues d'une manière élégante au niveau de l'adressage de la mémoire de déplacement 72, par des manipulations très simples sur les bits d'adresse, sous le contrôle de l'unité 60.

On voit donc maintenant que la caméra selon la présente invention peut passer de façon pratiquement continue pour l'opérateur du simple format au double format.

D'un autre côté, les changements de partitions sont également très simples, puisqu'il suffit de changer de mémoire de déplacement 72, ainsi que de disposer au niveau du système porte-fenêtres deux fenêtres correspondantes, ce qui s'effectue par simple emboîtement sur leur support avec accès par le dessus de la platine PT.

On a vu également que la caméra selon l'invention peut traiter tout aussi bien du film en rouleau que du film prédécoupé au format des microfiches.

Enfin, les dispositions de la présente invention sont facilement applicables à une caméra transposeuse de microfiches, ou bien à une caméra réalisant les microfiches monovues, sous réserve de prévoir un emplacement spécial et un système optique supplémentaire capable de travailler sur l'ensemble de la microfiche en une seule fois.

Bien entendu, la présente invention n'est pas limitée par le mode de réalisation décrit, mais s'étend à toute variante dans le cadre des revendications annexées.

## Revendications

1. Dispositif de prise de vues pour l'obtention de microfiches, comprenant un bâti (BA) muni d'une platine (PT) recouverte par un capot (CAP) étanche à la lumière, des moyens de déplacement disposé sous le capot pour déplacer de façon contrôlée un bloc porte-film (BPF) parallèlement à la platine selon deux directions orthogonales dites X-Y, en vis-à-vis d'un poste de prise de vues ménagé dans la platine, afin de permettre l'impression sur le film d'une succession d'images élémentaires rangées selon une partition choisie parmi différentes partitions d'images élémentaires admissibles sur les microfiches, les moyens de déplacement du bloc porte-film comprenant un guide longitudinal (GX1 à GX3) solidaire de la platine, supportant un chariot (TY1, TY2), un entraînement en X de ce chariot dans le sens du guide longitudinal, par un premier ensemble moteur pas à pas (MX) et vis sans fin (VX) venant en prise sur un premier curseur (CX) solidaire du chariot, tandis que le chariot porte à son tour un entraînement Y dans le sens transversal au guide longitudinal par un second ensemble moteur pas à pas (MY) et vis sans fin (VY) venant en prise sur un second curseur (CY) lequel est ainsi mobile pas à pas en X et en Y de façon commandée, caractérisé par le fait que :

la platine (PT) possède une surface supérieure plane horizontale,

le bloc porte-film (BPF) est muni de patins supports (BPF 21) aptes à glisser à frottement sec sur la face supérieure de la platine, et

que le bloc porte-film est monté solidaire du second curseur horizontalement en X et en Y et libre verticalement (GZ1, GZ2) par rapport à celui-ci pour reposer constamment contre la face supérieure plane de la platine.

2. Dispositif selon la revendication 1, caractérisé par le fait que le guide longitudinal (GX1 à GX3) supporte une extrémité du chariot (TY1, TY2) tandis qu'une autre extrémité de ce chariot repose sur la platine.

3. Dispositif selon l'une des revendications 1 et 2, caractérisé par le fait que le bloc porte-film (BPF) est apte à recevoir deux magasins (MR1, MR2) dérouleur et enrouleur de film-rouleau, tandis que sont également prévus dans la platine deux passages (PT11, PT12) aptes à être équipés en partie inférieure de deux magasins de microfiches prédécoupées.

4. Dispositif selon l'une des revendications 1 à 3, caractérisé par le fait que la platine définit, au niveau du poste de prise de vues, sous sa face supérieure plane horizontale, un couloir où coulisse de façon commandée, et parallèlement à la face supérieure plane de la platine, un chariot porte-fenêtres (CPD), par le fait que ce chariot (CPD) comporte des alvéoles en dent de scie tournés vers le haut (CPD30 à CPD32 ; CPD40 à CPD42) définissant deux emplacements de cadre porte-fenêtres (PD1 ; PD2), les cadres porte-fenêtres supportant respectivement deux fenêtres différentes (D1, D2) correspondant à des formats différents d'image sur une microfiche, tandis que les cadres porte-fenêtres (PD1, PD2) sont munis chacun de quatre tétons horizontaux latéraux (PD11 à PD14 ; PD21 à PD24), par l'intermédiaire desquels les cadres porte-fenêtres reposent dans les alvéoles, deux de ces tétons horizontaux (PD11, PD12, PD21, PD22) étant plus longs que les autres, et par le fait que sont prévus quatre tétons verticaux fixes (BD11 à BD14) solidaires de la platine, disposés par paire dans le couloir en regard des tétons horizontaux les plus longs, de telle sorte que l'appui des deux tétons horizontaux les plus longs d'un cadre porte-fenêtre sur deux des tétons verticaux fixes, appui qui intervient lors du déplacement du chariot dans le couloir, fasse monter l'un des cadres porte-fenêtres sur une paroi en dent de scie des alvéoles du chariot pour l'amener en position de prise de vues.

5. Dispositif selon la revendication 4, caractérisé par le fait qu'il comprend un obturateur constitué par un volet (VO) supporté par la platine et susceptible de pivotement dans un plan horizontal en regard du poste de prise de vues.

6. Dispositif selon l'une des revendications 1 à 5, caractérisé par le fait qu'il comprend en outre une table inférieure (TI) porte-documents disposée en-dessous de la platine et susceptible de déplacement relatif par rapport à celle-ci, dans la direction verticale, des moyens d'entraînement (VH1, VH2) associés à la platine et à la table inférieure pour déplacer celles-ci alternativement en éloignement et en rapprochement et un objectif principal (LO) de prise de vues disposé entre la platine et la table inférieure adapté pour la formation d'images élémentaires sur la microfiche et disposé sur un système de mise au point automatique (LO10 à LO23) sensible à la distance séparant la surface supérieure plane horizontale de la platine et la table inférieure.

7. Dispositif selon la revendication 6, caractérisé par le fait qu'il comprend en outre une table auxiliaire (TT1) adaptée pour recevoir les informations devant constituer l'en-tête de la microfiche et un système optique (RR1, LOT, RR2) apte à renvoyer l'image de l'en-tête de la microfiche vers un poste de prise de vues auxiliaires (PVT) prévu au niveau de la platine pour le titrage de la microfiche.

**Claims**

1. Device for taking photographs for the production of microfiches, comprising a stand (BA) provided with a plate (PT) covered by a light-proof cap (CAP), displacement means arranged below the cap for controlled displacement of a film holder unit (BPF) parallel to the plate in two orthogonal directions X-Y, opposite a film gate provided in the plate in order to permit the formation on the film of a succession of individual images arranged according to a format selected from various formats for individual images which are admissible on the microfiches, means for displacing the film holder unit comprising a longitudinal guide (GX1 to GX3) integral with the plate, supporting a carrier (TY1, TY2), a drive to X of this carrier in the direction of the longitudinal guide by a first stepping motor assembly (MX) and worm (VX) coming into engagement on a first cursor (CX) which is integral with the carrier, whilst the carrier in its turn supports a drive Y in the direction at right angles to the longitudinal guide by a second stepping motor assembly (MY) and worm (VY) coming into engagement on a second cursor (CY), which is thus capable of stepped movement to X and to Y in a controlled manner, characterised in that :

the plate (PT) has a flat horizontal upper surface,

the film holder unit (BPF) is provided with supporting feet (BPF21) capable of sliding by dry friction on the upper surface of the plate, and

the film holder unit is mounted in one piece with the second cursor, horizontally to X and Y and vertically free (GZ1, GZ2) with respect to the latter in order to rest constantly against the upper flat surface of the plate.

2. Device according to claim 1, characterised in that the longitudinal guide (GX1 to GX3) supports one end of the carrier (TY1, TY2) whilst the other end of the carrier rests on the plate.

3. Device according to one of claims 1 and 2, characterised in that the film holder unit (BPF) is capable of receiving two magazines (MR1, MR2), one for unwinding and one for winding a roll of film, whilst two orifices (PT11, PT12) capable of being equipped in the lower part with two magazines of precut microfiches are also provided in the plate.

4. Device as claimed in one of claims 1 to 3, characterised in that at the level of the film gate the plate defines below its flat horizontal upper surface a channel where a carrier with windows (CPD) slides in a controlled manner parallel to the upper flat surface of the plate ; and this carrier (CPD) has up-turned sawtooth cavities (CPD30 to CPD32 ; CPD40 to CPD42) defining two locations for frames with windows (PD1, PD2) supporting respectively two different windows (D1, D2) corresponding to different image formats on a microfiche, whilst the frames with windows (PD1, PD2) are each equipped with four lateral horizontal studs (PD11 to PD14 ; PD21 to PD24) by means of which the frames with windows rest in the cavities, two of these horizontal studs (PD11, PD12, PD21, PD22) being longer than the others ; four fixed vertical studs (BD11 to BD14) are provided which are integral with the plate and arranged in pairs in the channel opposite the longer horizontal studs in such a way that when the two longer horizontal studs of a frame with windows are supported on two of the fixed vertical studs, which occurs upon displacement of the carrier in the channel, this causes one of the frames with windows to rise on one sawtooth wall of the cavities in the carrier in order to bring it into position for taking photographs.

5. Device according to claim 4, characterised in that it has a shutter formed by a flap (VO) supported by the plate and capable of pivoting in a horizontal plane facing the film gate.

6. Device as claimed in one of claims 1 to 5, characterised in that it also has a lower table (TI) for supporting documents which is arranged below the plate and capable of relative displacement with respect to the latter in the vertical direction, drive means (VH1, VH2) associated with the plate and the lower table in order to move them alternately further apart and closer together, and a principal objective lens (LO) for taking photographs arranged between the plate and the lower table adapted for the formation of individual images on the microfiche and arranged on an automatic focusing system (LO10 to LO23) sensitive to the distance separating the flat horizontal upper surface of the plate and the lower table.

7. Device as claimed in claim 6, characterised in that it also has an auxiliary table (TT1) adapted to receive information intended to form the heading of the microfiche and an optical system (RR1, LOT, RR2) capable of transmitting the image of the microfiche heading to an auxiliary film gate (PVT) provided at the level of the plate for titling the microfiche.

**Patentansprüche**

1. Aufnahmegerät für die Herstellung von Microfiches, mit einem Gestell (BA) mit einer von einer lichtdichten Haube (CAP) abgedeckten Platine (PT), unter der Haube angeordneten Verstellvorrichtungen zum kontrollierten Verstellen eines Filmträgerblockes (BPF) parallel zur Platine in zwei zueinander rechtwinkligen Richtungen X und Y vor einer in die Platine eingearbeiteten Aufnahmestation, um das Belichten des Films mit einer Reihe von Einzelbildern zu ermöglichen, die entsprechend einer unter mehreren verschiedenen auf den Microfiches zulässigen Einzelbildeinteilungen gewählten Einteilung angeordnet sind, wobei die Verstellvorrichtungen für den Filmträgerblock eine mit der Platine fest verbundene, einen Schlitten (TY1, TY2) abstützende Längsführung (GX1 bis GX3) aufweisen, einen X-Achsen-Antrieb für diesen Schlitten in der Richtung der Längsführung durch eine erste Baugruppe mit einem Schrittmotor (MX) und einem Schneckentrieb (VX), der in ein erstes mit dem Schlitten fest verbundenes Gleitstück (CX) eingreift, wogegen der Schlitten seinerseits einen Y-Achsen-Antrieb in der Richtung quer zur Längsführung durch eine zweite Baugruppe mit einem Schrittmotor (MY) und einem Schneckentrieb (VY) trägt, der in ein zweites Gleitstück (CY) eingreift, welches somit schrittweise in X- und Y-Richtung gesteuert bewegbar ist, dadurch gekennzeichnet, daß

die Platine (PT) eine waagerechte ebene Oberseite hat,

der Filmträgerblock (BPF) mit Stützkufen (BPF21) versehen ist, die mit trockener Reibung auf der Oberseite der Platine zu gleiten vermögen,

und der Filmträgerblock mit dem zweiten Gleitstück waagerecht in X- und Y-Richtung fest verbunden und in bezug auf dieses Gleitstück in senkrechter Richtung frei beweglich ist (GZ1, GZ2) und auf der ebenen Oberseite der Platine ständig aufliegt.

2. Gerät nach Anspruch 1, dadurch gekennzeichnet, daß die Längsführung (GX1 bis GX3) ein Ende des Schlittens (TY1, TY2) abstützt, wogegen ein anderes Ende dieses Schlittens auf der Platine aufruht.

3. Gerät nach Anspruch 1 oder 2, dadurch gekennzeichnet, daß der Filmträgerblock (BPF) zwei Magazine (MR1, MR2) zum Ab-bzw. Aufwickeln von Rollfilm aufzunehmen vermag, während in der Platine zwei Durchbrüche (PT11, PT12) ausgebildet sind, die in ihrem unteren Abschnitt mit zwei Magazinen für Microfiche-Zuschnitte versehen werden können.

4. Gerät nach einem der Ansprüche 1 bis 3, dadurch gekennzeichnet, daß die Platine im Bereich der Aufnahmestation unter ihrer waagerechten ebenen Oberseite einen Schacht aufweist, in dem gesteuert und parallel zur ebenen Oberseite der Platine ein Fensterschieber (CPD) gleitet, daß dieser Schieber (CPD) nach oben offene sägezahnförmige Waben (CPD30 bis CPD32 ; CPD40 bis CPD42) aufweist, die zwei Aufnahmen für Fensterrahmen (PD1 ; PD2) bilden, welche je zwei verschiedene, verschiedenen Bildformaten auf einer Microfiche entsprechende Fenster (D1, D2) tragen, während die Fensterrahmen (PD1, PD2) je mit vier seitlichen waagerechten Zapfen (PD11 bis PD14 ; PD21 bis PD24) versehen sind, mit denen sie in den Waben ruhen, wobei zwei dieser waagerechten Zapfen (PD11, PD12, PD21, PD22) länger sind als die anderen, und daß mit der Platine vier feststehende senkrechte Zapfen (BD11 bis BD14) fest verbunden sind, die paarweise im Schacht den längsten waagerechten Zapfen gegenüber angeordnet sind, derart, daß das Anstoßen der beiden längsten waagerechten Zapfen eines Fensterrahmens an zweien der feststehenden senkrechten Zapfen beim Verstellen des Schiebers im Schacht bewirkt, daß einer der Fensterrahmen an einer sägezahnförmigen Wand der Waben im Schieber hochläuft, um ihn in Aufnahmestellung zu verbringen.

5. Gerät nach Anspruch 4 dadurch gekennzeichnet, daß es einen Verschluß aufweist, der von einem Flügel (VO) gebildet ist, welcher von der Platine getragen und der Aufnahmestation gegenüber in einer waagerechten Ebene schwenkbar ist.

6. Gerät nach einem der Ansprüch 1 bis 5, dadurch gekennzeichnet, daß es außerdem als Dokumentenauflage einen Untertisch (TI) aufweist, der unter der Platine angeordnet und in bezug auf sie in senkrechter Richtung verstellbar ist, mit der Platine und dem Untertisch verbundene Antriebsvorrichtungen (VH1, VH2) zum Verstellen derselben wechselweise voneinander weg und aufeinander zu, und ein Hauptaufnahmeobjektiv (LO), das zwischen der Platine und dem Untertisch angeordnet, auf die Herstellung von Einzelbildern auf dem Microfiche abgestimmt und auf einer automatischen Einstelleinrichtung (LO10 bis LO23) angeordnet ist, die auf den Abstand zwischen der waagerechten ebenen Oberseite der Platine und dem Untertisch anspricht.

7. Gerät nach Anspruch 6, dadurch gekennzeichnet, daß es ferner einen Hilfstisch (TT1) hat zur Aufnahme der Informationen, die den Titel des Microfiche bilden sollen, und eine optische Einrichtung (RR1, LOT, RR2) zum Ablenken des Bildes vom Titel des Microfiche zu einer Hilfsaufnahmestation (PVT) hin, die im Bereich der Platine zum Betiteln des Microfiche angeordnet ist.

FIG_1

FIG_2

FIG. 3

0 088 665

FIG_4A

FIG_4B

FIG_4C

0 088 665

FIG_5A

FIG_5B

0 088 665

validation deplacement
adresse X _ RAZ

Arrêt moteur X
dernière colonne

module de déplacement
axe X — 61

unité de
commande X — 66 → moteur MX

Validation deplacement
adresse Y . RAZ

arrêt moteur Y
dernière ligne

module de déplacement
axe Y — 62

unité de
commande Y — 67 → moteur MY

unité
de
contrôle — 60

autorisation aspiration
fin aspiration

aspiration
microfiche — 63

autorisation prise de vue
fin prise de vue

module de
prise de vue
(documents et titre) — 64

obturateurs
prise de vue,
titre — 68

affichage
position de la vue
sur la microfiche — 65

## FIG_6

prise de vue — 78

compteur
d'
adresses — 71

mémoire
de
déplacements
(morte) — 72

position à
atteindre

A  B
comparaison — 73

A = B (Fin de
déplacement)

position
actuelle

compteur
absolu — 74

A>B    A<B

opération précé-
-dente terminée — 70

autorisation
déplacement — 77

75

A ≠ B

&  — 76

sens

unité
de
commande — 79

→ moteur X

entrée
impulsions

→ moteur Y

sortie
oscillateur
interne

## FIG_7

5

0 088 665

marche (bouton poussoir) — 80

PF ou R/R — 81

R/R

position dechargement microfiche

positions de repos

chariot en $X_o$ $Y_o$ — 82

chariot en $Y_o$ $X_o + 154$ mm — 82A

début cycle (Bouton-poussoir) — 83

non

arrêt — 84

non

début cycle (Bouton-poussoir) — 83A

oui

oui

position chargement microfiche

chariot en $X_o$ $Y_o + 164$ mm — 85

chariot en $Y_o$ $X_o + 154$ mm — 85A

enroulement du film (chargement) (déchargement)

microfiche en place (aspiration)

$m = 1$ $n = 1$ — 86

m : numéro de colonne
n : numéro de ligne

prise de vue (bouton poussoir) chariot en $X_m$ $Y_n$ — 87

Fin (Bouton-poussoir) — 88

oui

non

$m = m + 1$ — 89

$m < m_{max}$ — 90

oui

changement de colonne

non

$m = 1$ $n = n + 1$ — 91

$n < n_{max}$ — 92

oui

changement de ligne

non

prise de vue "titre" chariot en $X_o + 228$ mm $Y_o$ — 93

FIG_8

6